# EUROPÄISCHE PATENTSCHRIFT

(11) **EP 1 381 478 B1**
(45) Veröffentlichungstag und Bekanntmachung des Hinweises auf die Patenterteilung: **28.05.2008**
(21) Anmeldenummer: 02747273.7
(22) Anmeldetag: 11.04.2002
(51) Int. Cl.: B21D 7/08, B60S 1/38

(54) **VERFAHREN ZUM HERSTELLEN GEBOGENER FEDERBANDABSCHNITTE**
METHOD FOR THE PRODUCTION OF CURVED SPRING STRIP SECTIONS
PROCEDE POUR PRODUIRE DES SECTIONS DE BANDE FLEXIBLE COURBES

(30) Priorität: 24.04.2001 DE 10120050
(43) Veröffentlichungstag der Anmeldung: 21.01.2004
(73) Patentinhaber: Valeo Wischersysteme GmbH, 74321 Bietigheim-Bissingen (DE)
(72) Erfinder: LENZEN, Oliver, 74343 Sachsenheim (DE); PACHUR, Gerald, 74354 Besigheim (DE)
(74) Vertreter: Jahn, Wolf-Diethart
(86) Internationale Anmeldenummer: PCT/EP2002/004024
(87) Internationale Veröffentlichungsnummer: WO 2002/085550

(56) Entgegenhaltungen:
- WO-A-01/62408
- WO-A-99/51375
- WO-A-99/52753

## Beschreibung

### Technisches Gebiet

Die vorliegende Erfindung betrifft ein Verfahren zum Herstellen gebogener Federbandabschnitte, insbesondere mit über die Abschnittslänge variabler Materialstärke, mit dem Merkmalen des Oberbegriffs des Anspruchs 1. Ein Verfahren, das diese Merkmale aufweist, ist der WO-A-99/51375 zu entnehmen.

### Stand der Technik

Aus der WO 99/51375 sind ein Verfahren sowie eine Vorrichtung zum Herstellen gebogener Federbandabschitte bekannt. Beim bekannten Verfahren wird ein von den einstückig aneinander angeordneten Federbandschnitten gebildetes Federband zwischen drei in Federbandvorschubrichtung voneinander beabstandeten, aufeinanderfolgend abwechselnd auf einer der beiden Bandseiten des Federbands anliegenden Auflagestellen gebogen und anschließend an einer nachfolgenden vierten Auflagestelle um einen dem gegenüber geringeren Biegegrad in Gegenrichtung wieder zurückgebogen. Der so behandelte Federbandabschnitt wird nachfolgend vom Federband abgetrennt. Die zweite der drei Auflagestellen für die Federbandbiegung und die vierte Auflagestelle für die Federbandrückbiegung sind jeweils quer zum Federband in Richtung Banddicke verstellbar ausgebildet. Die Querverstellungen der verstellbaren Auflagestellen werden relativ zum Federband nach vorgegebenen Programmen gesteuert, welche die sich in Federbandvorschubrichtung ändernde Materialstärke innerhalb der Federbandabschnitte berücksichtigen. Ein mit Hilfe dieses Verfahrens hergesteller Federbandabschnitt zeichnet sich durch seine hohe Formstabilität aus. Des weiteren ermöglicht das Verfahren einen kontinuierlichen Biegeprozess in einem einzigen Verfahrensgang, der einem Durchlauf durch die Auflagestellen entspricht.

Die bekannte Vorrichtung besitzt eine aus drei voneinander beabstandeten Auflagestellen bestehende Biegeeinheit, durch die ein von den hintereinander einstückig angeordneten Federbandabschnitten gebildetes Federband so hindurchführbar ist, daß die drei Auflagestellen in Vorschubrichtung des Federbandes aufeinanderfolgend abwechselnd an der einen und an der anderen Bandseite anliegen. Dabei ist die zweite der drei Auflagestellen zum Einstellen eines Biegeradius quer zum Federband verstellbar ausgebildet. Des weiteren besitzt die bekannte Vorrichtung eine der Biegeeinheit in Vorschubrichtung des Federbandes nachgeordnete Rückbiegeeinheit, die eine auf der gleichen Bandseite des Federbands wie die zweite der drei Auflagestellen der Biegeeinheit angreifende, vierte Auflagestelle umfaßt. Diese vierte Auflagestelle ist zur Einstellung eines Rückbiegeradius quer zum Federband verstellbar. Schließlich besitzt die bekannte Vorrichtung eine Trenneinheit zum Abtrennen des durch die Biegeeinheit und die Rückbiegeeinheit durchgelaufenen Federbandabschnitts vom Federband.

Aus der WO 01/62408 A1, die unter Artikel 54(3) EPÜ fällt, ist eine Biegevorrichtung zum Biegen von plastisch verformbarem Bandmaterial bekannt. In Vorschubrichtung des zu biegenden Bandmaterials sind eine Biegeeinheit und eine Rückbiegeeinheit vorgesehen. Die Biegeeinheit schließt funktionsmäßig eine ihr vorgelagerte Führungseinheit aus drei feststehenden Führungsrollen ein und besitzt selbst eine in Richtung der Banddicke verstellbare Biegerolle. Die Biegeeinheit umfasst somit insgesamt vier Rollen, die in Vorschubrichtung des Bandes betrachtet nacheinander an den gegenüberliegenden Seiten des angreifen. Nach der vierten Rolle der Biegeeinheit, d. h. der verstellbaren Biegerolle, ist eine ebenfalls in Richtung der Banddicke verstellbare Rückbiegerolle vorgesehen, welche auf der der Biegerolle gegenüberliegenden Seite des Bandes angreift.

Gebogene Federbandabschnitte, die mittels derartiger Verfahren und Vorrichtungen hergestellt sind, werden beispielsweise in Flachbalken-Scheibenwischern verwendet, die beispielsweise aus der US 3 192 551 bekannt sind. Bei einem solchen Flachbalken-Scheibenwischer erzeugt der Federbandabschnitt, an dem mittig der jeweilige Wischerarm des Scheibenwischers angreift, einen nahezu gleichmäßigen Andruck der am Rücken befestigen Gummiwischleiste auf der in der Regel gewölbten Oberfläche der Windschutzscheibe über den gesamten Wischbereich. Der hierbei verwendete Federbandabschnitt weist eine über seine Länge sich ändernde Materialstärke auf, die in Rückenmitte maximal ist und zu den beiden Rückenenden hin abnimmt.

Zum Herstellen derartiger Flachbalken-Scheibenwischer ist es aus der WO 99/52753 bekannt, den gebogenen Federbandabschnitt mit einer gummielastischen Wischerleiste zu vereinigen und eine Anschlußvorrichtung für einen Wischerarm anzubringen.

Die bekannte Vorgehensweise bzw. die bekannte Vorrichtung zum Herstellen gebogener Federbandabschnitte erfordert einen relativ aufwendigen Aufbau sowie einen relativ großen Aufwand, wenn die beim Biegevorgang und/oder beim Rückbiegevorgang wirksamen Hebelarme verändert werden sollen. Mit Hilfe der vorliegenden Erfindung sollen diese Nachteile behoben werden.

### Technologischer Hintergrund

Aus der DE-PS 458 563 ist es bekannt, ein durch einstückig aneinander angeordnete Federbandabschnitte gebildetes Federband in einer Bearbeitungsstation mit einem Loch- und Prägewerkzeug zu bearbeiten. Nach der Bearbeitung werden die so bearbeiteten Federbandabschnitte vom Federband abgetrennt.

Aus der WO 94/17932 sind ein Verfahren sowie eine Vorrichtung zum Herstellen von Federbandabschnitten mit variierender Materialstärke bekannt. Dabei wird ein Federband konstanter Dicke und Breite durch ein Paar einander gegenüberliegender Walzen gezogen, wobei gesteuert von einer Steuerungseinrichtung der Abstand der Walzen variiert wird, um so die jeweiligen Federbandabschnitte mit über deren Länge unterschiedlicher Dicke zu formen.

Aus der DE-OS 38 15 304 sind ein Verfahren sowie eine Vorrichtung zum Biegen bzw. Richten von Profilen und Bändern mit Walzen bzw. Rollen bekannt. Auch hier sind die Auflagestellen, also die Rollen oder Walzen abwechselnd auf beiden Seiten des zu verformenden Bandes gestaffelt angeordnet, wobei unter einer gestaffelten Anordnung zu verstehen ist, daß die Auflagestellen abwechselnd aufeinanderfolgend auf der einen oder anderen Seite des Bandes zueinander versetzt anstehen. Dabei sind alle Auflagestellen jeweils einzeln quer zum Band in Richtung Banddicke rechnergesteuert verstellbar. Dabei hat sich gezeigt, daß die so hergestellten Bänder weit geringere, wenn überhaupt, Eigenspannungen aufweisen. Auch ist ein kontinuierlicher Biegebetrieb realisiert.

In der bereits genannten DE-OS 38 15 304 wird neben einem Biegevorgang außerdem ein Richtvorgang beschrieben, wobei sich das Richten vom Biegen dadurch unterscheidet, daß das Richten gewissermaßen aus einem zweimaligen Anwenden des beschriebenen Biegeverfahrens besteht, wobei das zweite Biegen gegenphasig zum ersten Biegen durchgeführt wird, so daß einem Biegen aus der jeweiligen Bezugsebene in die eine Richtung ein Biegen aus der Bezugsebene durch weitere Auflagestellen in die andere Richtung folgt. Dementsprechend werden die Auflagestellen auch beim Richten quer zum Band in Richtung Banddicke verstellt, um gegenphasige Auslenkungen zu erreichen.

Die aus der oben genannten DE-OS 38 15 304 bekannte Vorrichtung für das Richten unterscheidet sich von derjenigen zum Biegen dadurch, daß die Anordnung der Auflagestellen so getroffen ist, daß das Richten durch ein zweimaliges Biegen in entgegengesetzten Richtungen zur Bezugsebene erfolgen kann, so daß im Prinzip die Vorrichtung zum Biegen und auch für das Richten einsetzbar ist. Je nach der geforderten Genauigkeit der Biegeradien wird reversierend gebogen.

Zwar wird in diesem Dokument (DE-OS 38 15 304) darauf hingewiesen, daß das Richten in der Praxis generell durch Kaltformen erfolgt, um verbogene bzw. verzogene Werkstücke in die gewünschte geometrische Form zu bringen, jedoch finden sich keinerlei Hinweise dahingehend, daß mit einer gewünschten geometrischen Form eine von einer ungekrümmten oder ungebogenen Form abweichende Form gemeint sein könnte. Denn unter Richten wird im allgemeinen ein Biegevorgang verstanden, bei dem das gerichtete Endprodukt einen Biegeradius von quasi unendlich aufweist und somit eine maximale Geradheit bzw. eine minimale Restkrümmung besitzt. Dementsprechend ist das Richten eine Unterform des Biegens mit aufeinanderfolgenden, entgegengesetzten Biegeverformungen mit jeweils abnehmendem Biegegrad (vgl. z.B. Thomas Neff: "Rollenrichtmaschinen - Typologie und charakteristische Merkmale" in "Bänder, Bleche, Rohre" 6-1976, Seite 223 bis 226). Entsprechendes ergibt sich auch aus dem Handbuch der Fertigungstechnik, Band 2/3 "Umformen und Zerteilen", Seite 1288, Carl Hanser Verlag München Wien, 1985, wo unter Bezugnahme auf **DIN 8586** das Walzrichten als Unterform des Walzbiegens dargestellt wird.

Zwar ist es aus dem bereits oben zitierten Aufsatz von **Thomas Neff** grundsätzlich bekannt, daß Rollenrichtmaschinen mit parallel begrenztem Richtraum auch zur Erzeugung vorgegebener Krümmungen, d.h. als Biegemaschinen, einsetzbar sind (vgl. Seite 225, Abschnitt 3.1.1), so daß durch eine Biegung und eine nachfolgende geringere Rückbiegung eine gebogene Form herstellbar ist, jedoch fehlt ein ausdrücklicher Hinweis, daß dies mit einzeln verstellbaren Auflagegestellen erreichbar ist.

Aus der DE 195 03 850 C1 ist eine Richtvorrichtung bekannt, bei der zur Erzielung eines gewünschten Richtgrades einzelne Richtrollen oder zu Gruppen zusammengefaßte Richtrollen verstellbar ausgebildet sind, wobei die Verstellung in Abhängigkeit einer nachgeschalteten Auswerteeinrichtung erfolgt. Auch hier soll Bandmaterial gerichtet werden; die Herstellung gebogener Bandabschnitte wird nicht erläutert.

Aus der Dissertation der Fakultät für Maschinenbau, Universität Karlsruhe (TH), von **Werner Klein** aus dem Jahr 1979 mit dem Titel "Mechanische und röntgenographische Untersuchungen zum Biegeverformungsverhalten unlegierte Stähle bei Raumtemperatur" ist es bekannt, daß bei Biege-Rückverformung der inhomogene Eigenspannungszustand nach großer Vorverformung bereits nach geringer Rückverformung abgebaut wird (vgl. Seite 97). Dabei handelt es sich bei dieser Dissertation stets um Biegeverformungen mit nachfolgender, geringerer Rückverformung, die im Zusammenhang mit Richten durchgeführt werden. Bei der vorliegenden Erfindung sollen jedoch gebogene Federbandabschnitte mit einer gewünschten, geometrischen Form und nicht gerichtete Federbandabschnitte hergestellt werden.

### Erfindung

Die vorliegende Erfindung beschäftigt sich mit dem Problem, ein Verfahren der eingangs genanten Art so auszubilden, daß sich für die zugehörige Vorrichtung ein vereinfachter Aufbau ergibt.

Dieses Problem wird erfindungsgemäß durch ein Verfahren mit den Merkmalen des Anspruchs 1 gelöst.

Die Erfindung beruht auf dem allgemeinen Gedanken, von den drei Auflagestellen für die Federbandbiegung die der vierten Auflagestelle für die Federbandrückbiegung benachbarte dritte Auflagestelle quer zum Federband in Richtung Banddicke verstellbar auszubilden. Durch diese Bauweise sind somit die beiden letzten Auflagestellen verstellbar, ohne daß eine weitere, nicht verstellbare Auflagestelle dazwischen angeordnet ist. Hierdurch ergibt sich für die dritte Auflagestelle zur Federbandbiegung und für die vierte Auflagestelle zur Federbandrückbiegung eine gegenläufige Anordnung, die eine kompaktere Bauweise ermöglicht, da der Abstand zwischen den verstellbaren Auflagepunkten deutlich geringer ausgebildet werden kann. Dies ist insbesondere dann von Vorteil, wenn dem erfindungsgemäßen Verfahren zusätzliche Verfahrensschritte mit nachfolgender Bearbeitung nachgeschaltet werden sollen.

Darüber hinaus ermöglicht die Anordnung der verstellbaren Auflagestellen eine deutliche Vereinfachung bei der Einstellung der für den Biegevorgang und für den Rückbiegevorgang wirksamen Hebelarme. Denn bei der Erfindung müssen lediglich die beiden letzten Auflagestellen in Vorschubrichtung positioniert werden, während bei einer Anordnung mit einer zwischen den verstellbaren Auflagestellen angeordneten festen Auflagestelle auch diese feste Auflagestelle in Vorschubrichtung verstellt werden muß (vgl. z.B. WO 99/51375). Auch hierbei ermöglicht die Erfindung einen besonders kompakten Aufbau für die Vorrichtung.

Ein besonderer Vorteil des erfindungsgemäßen Verfahrens wird darin gesehen, daß das Trennen der Federbandabschnitte völlig vom Biegevorgang und Rückbiegevorgang entkoppelt werden kann. Insbesondere lassen sich dadurch einzelne Prozeßparameter unabhängig voneinander optimieren, wodurch auch der Gesamtprozeß leichter und besser optimierbar ist.

Des weiteren können sich im Hinblick auf die Abstimmung der beiden Verfahrensschritte Biegen und Rückbiegen Vereinfachungen ergeben, da keine zwischenliegende, feste Auflagestelle berücksichtigt werden muß.

Insgesamt können mit der vorliegenden Erfindung somit entscheidende Vorteile bei der Serienherstellung gebogener Federbandabschnitte erzielt werden, die sich positiv auf die Herstellungskosten auswirken.

Entsprechend einer besonders vorteilhaften Weiterbildung des erfindungsgemäßen Verfahrens kann der abgetrennte Federbandabschnitt in einem weiteren Verfahrensschritt mit einer gummielastischen Wischerleiste vereinigt werden, wobei außerdem eine Anschlußvorrichtung für einen Wischerarm angebracht wird. Auf diese Weise können besonders preiswert Flachbalken-Scheibenwischer mit integriertem, gebogenem Federbandabschnitt hergestellt werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

### Zeichnung

Ein bevorzugtes Ausführungsbeispiel der Erfindung ist in der Zeichnung dargestellt und wird in der nachfolgenden Beschreibung näher erläutert.

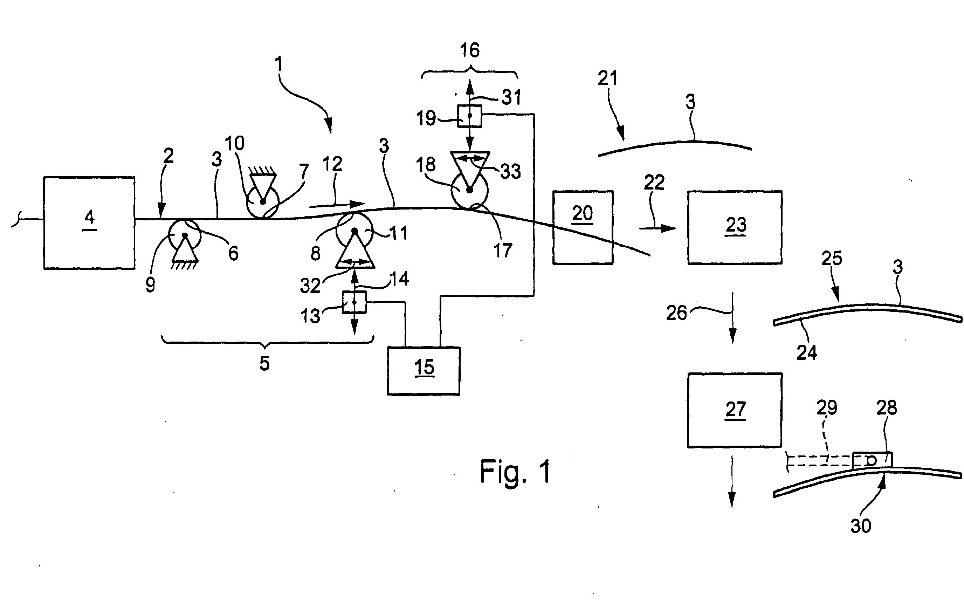

Die einzige Figur 1 zeigt eine stark vereinfachte Prinzipdarstellung einer Vorrichtung zum Herstellen gebogener Federbandabschnitte.

### Bevorzugte Ausführungsform

Entsprechend Fig. 1 wird einer vorrichtung 1 ein Federband 2 zugeführt, das durch einstückig aneinander angeordnete Federbandabschnitte 3 gebildet ist. Das Federband 2 wird dabei von einer, hier nicht gezeigten Spule, quasi als Endlosband zugeführt. Vor dem Eintritt in die Vorrichtung 1 kann das Federband 2 eine Richtstation 4 durchlaufen, in der ein herkömmliches vertikales und/oder horizontales Richten des Federbandes 2 stattfindet.

Die Vorrichtung 1 weist eine durch eine geschweifte Klammer gekennzeichnete Biegeeinheit 5 mit drei Auflagestellen, nämlich einer ersten Auflagestelle 6, einer zweiten Auflagestelle 7 und einer dritten Auflagestelle 8 auf. Die drei Auflagestellen 6 bis 8 sind hier jeweils durch Rollen oder Walzen 9,10 und 11 realisiert. Die drei Auflagestellen 6 bis 8 sind in einer durch einen Pfeil symbolisierten Federbandvorschubrichtung 12 voneinander beabstandet und aufeinander folgend abwechselnd auf einer der beiden Bandseiten des Federbands 2 anliegend angeordnet. Während die erste Auflagestelle 6 und die zweite Auflagestelle 7 als stationäre Auflagestellen ausgebildet sind, ist die dritte Auflagestelle 8 als verstellbare Auflagestelle ausgestaltet. Zu diesem Zweck ist die zugehörigen Walze 11 mittels eines geeigneten Stellglieds 13 quer zum Federband 2 in Richtung Banddicke verstellbar. Diese Verstellbewegung verläuft in der Zeichnungsebene und ist durch einen Doppelpfeil 14 symbolisiert. Das Stellglied 13 wird von einer Steuerung 15 betätigt, in der geeignete Programme zum Steuern der dritten Auflagestelle 8 ablaufen.

Bezüglich der Vorschubrichtung 12 ist nach der Biegeeinheit 5 eine ebenfalls durch eine geschweifte Klammer symbolisierte Rückbiegeeinheit 16 vorgesehen, die eine vierte Auflagestelle 17 aufweist. Diese vierte Auflagestelle 17 ist ebenfalls durch eine Walze oder Rolle 18 gebildet, die mittels eines Stellglieds 19 senkrecht zum Federband 2 in Richtung Banddicke verstellbar ist. Auch dieses Stellglied 19 wird von der Steuerung 15 betätigt.

Diese in der Zeichnungsebene liegende Verstellbarkeit der vierten Auflagestelle 17 ist in Fig. 1 durch einen Doppelpfeil 31 angedeutet.

Bezüglich der Vorschubrichtung 12 ist der Rückbiegeeinheit 16 nachfolgend eine Trenneinheit 20 angeordnet, in welcher der gebogene und rückgebogenen Federbandabschnitt 3 vom Federband 2 abgetrennt wird. Zu diesem Zweck enthält die Trenneinheit 20 eine entsprechende Schnittkante, die mit einem geeigneten Schneidmesser zusammenwirkt. Nach dem Trennen liegt ein separierter, gebogener Federbandabschnitt 3 vor, der in Fig. 1 symbolisch dargestellt und mit 21 bezeichnet ist.

Entsprechend einem Pfeil 22 wird der separierte, gebogene Federbandabschnitt 21 nach der Trenneinheit 20 einer Vereinigungsstation 23 zugeführt, in welcher der separierte und gebogene Federbandabschnitt 21 mit einer gummielastischen Wischleiste 24 vereint wird. Dieser mit der Wischleiste 24 versehene, gebogene Federbandabschnitt 3 ist in Fig. 1 mit 25 bezeichnet und wird entsprechend einen Pfeil 26 einer Anbringstation 27 zugeführt, in welcher eine Anschlußvorrichtung 28 daran angebracht wird, die zum Anschluß des fertiggestellten Scheibenwischers an einen mit unterbrochenen Linien dargestellten Wischerarm 29 dient. Der fertige Flachbalken-Scheibenwischer ist in Fig. 1 mit 30 bezeichnet.

Bei einer besonderen Ausgestaltung der Vorrichtung 1 können sowohl für die dritte Auflagestelle 8 als auch für die vierte Auflagestelle 17 nicht gezeigte Längspositioniermittel vorgesehen sein, mit deren Hilfe diese Auflagestellen 8 und 17 in Vorschubrichtung 12 positionierbar sind. Diese Verstellbarkeit der Auflagestellen 8 und 17 bzw. der zugeordneten Rollen 11 und 18 ist in Fig. 1 durch Doppelpfeile 32 und 33 symbolisch dargestellt. Beispielsweise können dadurch die beim Biegen und/oder Rückbiegen wirksamen Hebelarme eingestellt und insbesondere während des Biegeprozesses variiert werden.

### Das erfindungsgemäße Verfahren arbeitet wie folgt:

Das Federband 2 wird nach dem in der Richtstation 4 durchgeführten Richten der Vorrichtung 1 zugeführt, wobei die vier Auflagestellen 6,7,8 und 17 in Vorschubrichtung 12 voneinander beabstandet aufeinanderfolgen und abwechselnd an der einen und an der anderen Bandseite des Federbands 2 zur Anlage kommen. Die dritte Auflagestelle 8 erzeugt eine Biegung des jeweiligen Federbandabschnittes 3 mit einem vorbestimmten Biegegrad bzw. Biegeradius. Die vierte Auflagestelle 17 erzeugt eine Rückbiegung, deren Rückbiegegrad bzw. Rückbiegeradius kleiner ist als der der vorangehenden Biegung bei der dritten Auflagestelle 8. Durch diese Rückbiegung können im Federbandabschnitt 3 Eigenspannungen abgebaut werden, die sich beim vorangehenden Biegevorgang ausgebildet haben. Mit Hilfe der verstellbaren dritten und vierten Auflagestellen 8 und 17 können mittels geeigneter Programme durch eine entsprechende Ansteuerung der Stellglieder 13 und 19 durch die Steuerung 15 sich in Vorschubrichtung 12 ändernde Materialstärken innerhalb des Federbandabschnitts 3 und/oder sich in Federbandvorschubrichtung 12 ändernde Biegeradien und/oder Rückbiegeradien berücksichtigt werden. Auf diese Weise können relativ komplexe Biegevorgänge in einem kontinuierlichen Biegeprozess durchgeführt werden.

Nach dem Trennen in der Trennstation 20 und vor dem Vereinigen des separierten Federbandabschnitts 3 mit der Wischleiste 24 kann der gebogene Federbandabschnitt 21 einer Wärmebehandlung unterzogen werden, die ebenfalls zum Abbau von Eigenspannungen beitragen kann. Das Anbringen der Wischleiste 24 sowie der Anschlußvorrichtung 28 kann dann anschließend durchgeführt werden.

Zwar sind die erste und zweite Auflagestelle 6 und 7 jeweils als stationäre Auflagestellen 6,7 ausgebildet, jedoch ist klar, daß auch diese Auflagestellen 6 und 7 insbesondere zum Justieren oder zum festen Einstellen der jeweiligen Materialstärke des zugeführten Materials einstellbar sind. Während des kontinuierlichen Biegeprozesses bleiben sie allerdings im Unterschied zur dritten und vierten Auflagestelle 8 und 17 fixiert.

Ein weiterer Vorteil der Anordnung der verstellbaren Auflagestellen, also der dritten und vierten Auflagestelle 8 und 17, wird darin gesehen, daß die Trenneinheit 20 nach der Biegeeinheit 5 und nach der Rückbiegeeinheit 16 angeordnet werden kann, wodurch eine prozesstechnische Entkopplung des Trennvorgangs von den Biegevorgängen erreicht wird.

Es ist klar, daß mit Hilfe der Steuerung 15 und der verstellbaren Auflagestellen 8 und 17 neben der Berücksichtigung sich ändernder Materialstärken und/oder sich ändernder Biege- und Rückbiegeradien des weiteren permanent korrigierend in den Biegeprozess sowie in den Rückbiegeprozess eingegriffen werden kann. Eine entsprechende Sensorik ist hier jedoch nicht dargestellt.

## Patentansprüche

1. Verfahren zum Herstellen gebogener Federbandabschnitte (3), insbesondere mit über die Abschnittslänge variabler Materialstärke, bei dem ein von den einstückig aneinander angeordneten Federbandabschnitten (3) gebildetes Federband (2) zwischen drei in Federbandvorschubrichtung (12) voneinander beabstandeten, aufeinanderfolgend abwechselnd auf einer der beiden Bandseiten des Federbandes (2) anliegenden Auflagestellen (6,7,8) gebogen und anschließend an einer nachfolgenden vierten Auflagestelle (17) in Gegenrichtung wieder zurückgebogen wird, wobei der so behandelte Federbandabschnitt (3) nachfolgend vom Federband (2) abgetrennt wird, wobei eine der drei Auflagestellen (6,7,8) für die Federbandbiegung und die vierte Auflagestelle (17) für die Federbandrückbiegung jeweils quer zum Federband (2) in Richtung Banddicke verstellbar ausgebildet sind und ihre Querverstellungen relativ zum Federband (2) nach vorgegebenen Programmen gesteuert werden, welche die sich in Federbandvorschubrichtung (12) ändernde Materialstärke innerhalb der Federbandabschnitte (3) und/oder sich in Federbandvorschubrichtung (12) ändernde Biegeradien und/oder Rückbiegeradien berücksichtigen, **dadurch gekennzeichnet, dass** an der der vierten Auflagestelle (17) benachbarten dritten Auflagestelle (8) die Biegung des Federbandes (2) mit einem vorbestimmten Biegegrad und an der vierten Auflagestelle (17) die Rückbiegung des Federbandes (2) um einen demgegenüber geringeren Biegegrad erzeugt wird.

2. Verfahren nach Anspruch 1,
**dadurch gekennzeichnet, dass** an der dritten in Federbandvorschubrichtung (12) positionierbar ausgebildeten Auflagestelle (8) der Federbandbiegung und/oder an der vierten in Federbandvorschubrichtung (12) positionierbar ausgebildeten Auflagestelle (17) der Federbandrückbiegung das Federband (2) mit einem eingestellten Hebelarm gebogen und/oder mit einem eingestellten Hebelarm rückgebogen wird.

3. Verfahren nach Anspruch 1 oder 2,
**dadurch gekennzeichnet, dass** in einer der vierten Auflagestelle (17) für die Federbandrückbiegung in Federbandvorschubrichtung (12) nachfolgenden Trenneinheit (20) die gebogenen und rückgebogenen Federbandabschnitte (2) von dem Federband (2) abgetrennt werden.

4. Verfahren nach einem der Ansprüche 1 bis 3, **gekennzeichnet durch** folgende Schritte:
- Vereinigen des Federbandabschnitts (3) mit einer gummielastischen Wischleiste (24) und
- Anbringen einer Anschlussvorrichtung (28) für einen Wischerarm (29).

## Claims

1. Method for manufacturing bent spring strip sections (3), in particular with a variable material strength throughout the length of the sections, in which a spring strip band (2) which is formed by the spring strip sections (3) which are arranged singly adjacent to each other is bent between three contact points (6, 7, 8) which are spaced alternately on both sides of the spring strip band (2) in the direction of advancement (12) and subsequently bent back again in a subsequent fourth contact point (17) in the opposite direction, wherein the thus treated spring strip section (3) is subsequently separated from the spring strip band (2), wherein one of the three contact points (6, 7, 8) for bending the spring strip band and the fourth contact point (17) for bending the spring strip band back are respectively formed so that they are adjustable transversely to the spring strip band (2) in the direction of the band thickness and their crosswise adjustments in relation to the spring strip band (2) are controlled using specific programmes, which take account of the changing material strength within the spring strip sections (3) in the direction of advancement of the spring strip band (12) and/or bending or back-bending radii which change in the direction of advancement of the spring strip band (12),
**characterised in that** at the third contact point (8) which is adjacent to the fourth contact point (17), the bending of the spring strip band (2) is produced with a predetermined degree of flexure and at the fourth contact point (17), the back-bending of the spring strip band (2) is produced by a comparatively lesser degree of flexure.

2. Method according to claim 1, **characterised in that** at the third contact point (8) which is formed so that it can be positioned in the direction of advancement of the spring strip band (12) and where the spring strip band is bent, and/or at the fourth contact point (17) which is formed so that it can be positioned in the direction of advancement of the spring strip band (12) and where the spring strip band is bent back, the spring strip band (2) is bent with an adjusted lever arm and/or bent back with an adjusted lever arm.

3. Method according to claim 1 or 2, **characterised in that** in a separating unit (20) which follows the fourth contact point (17) for bending the spring strip band back in the direction of advancement of the spring strip band (12), the bent and re-bent spring strip sections (3) are separated from the spring strip band (2).

4. Process in accordance with one of the claims 1 to 3,
**characterised by** the following stages:
- combination of the spring strip section (3) with a rubber elastic wiping strip (24) and
- application of a connecting device (28) for a wiper arm (29).

## Revendications

1. Procédé permettant de fabriquer des sections de bande élastique (3) courbées, en particulier ayant une épaisseur de matériau variable sur la longueur de la section, dans lequel une bande élastique (2) formée par les sections de bande élastique (3), disposées de manière adjacente les unes aux autres, en une seule pièce, est courbée entre trois points d'appui (6, 7, 8), éloignés les uns des autres dans le sens d'avancement de la bande élastique (12), se suivant les uns les autres de manière alternée sur l'un des deux côtés de bande de la bande élastique (2), puis recourbée au niveau d'un quatrième point d'appui (17) suivant, dans le sens inverse, moyennant quoi la section de bande élastique (3) ainsi traitée est alors séparée de la bande élastique (2), moyennant quoi l'un des trois points d'appui (6, 7, 8), destinés à la courbure de la bande élastique et le quatrième point d'appui (7), destiné à la courbure inverse de la bande élastique, sont configurés respectivement en pouvant être décalés transversalement par rapport à la bande élastique (2) dans le sens de l'épaisseur de la bande, et leurs décalages transversaux par rapport à la bande élastique (2) sont commandés en fonction de programmes prédéfinis, qui prennent en considération l'épaisseur de matériau variable dans le sens d'avancement de la bande élastique (12) à l'intérieur des sections de bande élastique et/ou les rayons de courbure variables dans le sens d'avancement de la bande élastique (12) et/ou les rayons de courbure inverse, **caractérisé en ce que**, au niveau du troisième point d'appui (8), voisin du quatrième point d'appui (17), la courbure de la bande élastique (2) est produite avec un degré de courbure prédéfini et, au niveau du quatrième point d'appui (17), la courbure inverse de la bande élastique (2) est produite avec un degré de courbure réduit par rapport à celui-ci.

2. Procédé selon la revendication 1, **caractérisé en ce que**, au niveau du troisième point d'appui (8) configuré de manière à pouvoir être positionné dans le sens d'avancement de la bande élastique (12), destiné à la courbure de la bande élastique, et/ou au niveau du quatrième point d'appui (17), configuré de manière à pouvoir être positionné dans le sens d'avancement de la bande élastique (12), destiné à la courbure inverse de la bande élastique, la bande élastique (2) est courbée avec un bras de levier réglé et/ou recourbée avec un bras de levier réglé.

3. Procédé selon la revendication 1 ou 2,
**caractérisé en ce que**, dans une unité de séparation (20) suivant le quatrième point d'appui (17) destiné à la courbure inverse de la bande élastique dans le sens d'avancement de la bande élastique (12), les sections de bande élastique (2) courbées et recourbées sont séparées de la bande élastique (2).

4. Procédé selon l'une quelconque des revendications 1 à 3, **caractérisé par** les étapes suivantes :
- association de la section de bande élastique (3) avec une réglette d'essuyage (24) élastique en caoutchouc et
- application d'un dispositif de raccordement (28), destiné à un porte-balai (29).
